# EUROPÄISCHE PATENTSCHRIFT

(11) **EP 1 784 329 B1**
(45) Veröffentlichungstag und Bekanntmachung des Hinweises auf die Patenterteilung: **30.07.2008**
(21) Anmeldenummer: 05784522.4
(22) Anmeldetag: 01.09.2005
(51) Int. Cl.: B62J 1/00

(54) **FAHRRADSATTEL**
BICYCLE SADDLE
SELLE DE BICYCLETTE

(30) Priorität: 01.09.2004 DE 202004013746 U
(43) Veröffentlichungstag der Anmeldung: 16.05.2007
(73) Patentinhaber: RTI Sports Vertrieb von Sportartikeln GmbH, 56220 Urmitz (DE)
(72) Erfinder: SCHEFFER, Lutz, 75173 Pforzheim (DE); HEIMERDINGER, Andreas, 75172 Pforzheim (DE)
(74) Vertreter: von Kirschbaum, Alexander
(86) Internationale Anmeldenummer: PCT/EP2005/054313
(87) Internationale Veröffentlichungsnummer: WO 2006/024659

(56) Entgegenhaltungen:
- EP-A- 0 816 214
- EP-A- 1 076 002
- WO-A-01/94192
- AT-B- 405 812
- DE-C- 91 361
- DE-C- 172 806
- DE-C- 824 607
- US-A- 1 881 136
- US-A- 5 203 606
- US-A1- 2001 008 348
- US-B1- 6 357 825
- US-B1- 6 371 554
- US-B1- 6 575 529

## Beschreibung

Die Erfindung betrifft einen Fahrradsattels, insbesondere einen Herren-Fahrradsattel, wie sie für Fahrräder, insbesondere Mountainbikes, Rennräder und dgl. verwendet werden.

Fahrradsättel weisen im Allgemeinen im hinteren Bereich des Fahrradsattels ein Sitzteil für das Gesäß eines Fahrradfahrers auf. Das Sitzteil geht in Fahrtrichtung in ein schmales und längliches Vorderteil über. Nachteilig bei einem derartigen Fahrradsattel ist, dass während des Fahrradfahrens von dem Fahrradsattel ein Druck auf den Genitalbereich des Fahrradfahrers ausgeübt wird. Der Druck auf den Genitalbereich ist für den Fahrradfahrer unangenehm und reduziert den Fahrkomfort. Ferner besteht die Gefahr, dass insbesondere bei längerem Fahrradfahren dauerhafte medizinische Probleme bei dem Fahrradfahrer auftreten.

Aus DE 199 32 031 A1 ist es bekannt, das Vorderteil des Fahrradsattels mit dem Sitzteil gelenkig zu verbinden, so dass das Vorderteil des Fahrradsattels zur Vermeidung von Druck im Genitalbereich nach unten weggeklappt werden kann. Nachteilig bei diesem Fahrradsattel ist, dass bei weggeklapptem Vorderteil eine Entlastung im Genitalbereich tatsächlich nicht erreicht wird. Insbesondere ist es nicht möglich, den Fahrradsattel individuell für einen Fahrradfahrer einzustellen.

Die Dokumente EP 1 076 002 und EP 0 816 214 zeigen jeweils Fahrradsättel gemäß dem Oberbegriff von Anspruch 1.

Der Erfindung liegt die Aufgabe zu Grunde, einen Fahrradsattel zu schaffen, bei dem der Druck im Genitalbereich des Fahrradfahrers reduziert ist.

Die Lösung der Aufgabe erfolgt erfindungsgemäß durch die Merkmale des Anspruchs 1.

Der erfindungsgemäße Fahrradsattel, bei dem es sich insbesondere um einen Herren-Fahrradsattel handelt, weist ein Sitzteil für das Gesäß eines Fahrradfahrers und ein sich an das Sitzteil anschließendes Vorderteil auf. Das Vorderteil weist einen dem Sitzteil zugewandten Endbereich auf, der sich insbesondere unterhalb des Genitalbereichs des Fahrradfahrers befindet. Erfindungsgemäß ist zumindest der Endbereich des Vorderteils relativ zum Sitzteil höhenverstellbar, d. h., der Endbereich kann als Ganzes mit einer Bewegungskomponente in vertikaler Richtung bewegt werden.

Die Höhenverstellung des Endbereichs des Vorderteils des Fahrradsattels wird dadurch erreicht, dass das Vorderteil eine zu dem Sitzteil beabstandete Schwenkachse aufweist. Unter Schwenkachse wird insbesondere eine gedachte Linie verstanden, die als Bezugslinie für eine Schwenkbewegung des Vorderteils dient. Diese virtuelle Schwenkachse kann, aber muss nicht, eine gegenständliche Ausgestaltung erfahren. Durch die beabstandete Anordnung der Schwenkachse wird erreicht, dass insbesondere der vordere Bereich bzw. die Sattelspitze des Vorderteils relativ zum Sitzteil fest steht und der Endbereich nach unten bzw. nach oben verschwenkt werden kann. Dadurch kann der Druck im Genitalbereich durch die Höhenverstellung des Endbereichs reduziert werden.

Vorzugsweise ist der Endbereich gefedert, so dass plötzliche Stöße abgefedert bzw. gedämpft werden können. Durch die Federung wird das Höhenniveau des Endbereichs automatisch reguliert. Wenn sich der Fahrradfahrer beim Fahrradfahren beispielsweise nach vorne lehnt, kann der Endbereich somit nachgeben, so dass eine unangenehme Belastung des Genitalbereich des Fahrradfahrers vermieden wird. Sobald sich der Fahrradfahrer wieder zurücklehnt, kann sich der Endbereich wieder zurück bewegen, um die ursprüngliche Fahrradsattelform wieder herzustellen. Die Härte und der Federweg der Federung kann hierbei individuell an den Fahrradfahrer, insbesondere an seine Anatomie und sein Gewicht, angepasst werden, wodurch der Fahrkomfort verbessert wird. Ferner kann die automatische Niveauregulierung, die durch den gefederten Endbereich erreicht wird, derart ausgeführt sein, dass ein bestimmter Restdruck von dem Endbereich auf den Genitalbereich des Fahrradfahrers erhalten bleibt. Dadurch wird ein vollständiges Wegklappen des Endbereichs vermieden und der Fahrradfahrer erfährt auch durch den Endbereich eine gewisse Stützung, die zu einem sicheren Fahrgefühl führt und dadurch den Fahrkomfort weiter verbessert.

Zusätzlich bzw. alternativ kann die Höhenverstellung des Endbereichs dadurch erreicht werden, dass das Vorderteil mit dem Sitzteil über eine Verstelleinrichtung verbunden ist, die das Sitzteil relativ gegenüber- dem Vorderteil im Wesentlichen in vertikaler Richtung bewegen kann. Das Sitzteil ist somit relativ gegenüber dem Vorderteil bei im Wesentlichen gleicher horizontaler Ausrichtung höhenverstellbar.

Vorzugsweise sind das Vorderteil und das Sitzteil zueinander beabstandet angeordnet, so dass der Fahrradsattel quer geteilt ist. Der Abstand zwischen dem Vorderteil und dem Sitzteil kann ggf. durch ein flexibles Material, wie beispielsweise eine Folie, und oder elastisches Material, z. B. Schaumstoff, verschlossen sein, so dass einerseits die Relativbewegung des Vorderteils und des Sitzteils ermöglicht wird und andererseits der Fahrradfahrer vor Spritzwasser geschützt ist.

Der erfindungsgemäße Fahrradsattel kann individuell an einen Fahrradfahrer angepasst werden. Insbesondere durch die Kombination des durch eine Schwenkbewegung absenkbaren Endbereichs des Vorderteils und der relativen Höhenverstellung in vertikaler Richtung des Sitzteils gegenüber dem Vorderteil kann die Sattelspitze des Vorderteils und der Endbereich des Vorderteils in der Höhe nahezu beliebig eingestellt werden, so dass der erfindungsgemäße Fahrradsattel individuell an die Komfortbedürfnisse des Fahrradfahrers angepasst werden kann. Hierzu weist das Vorderteil insbesondere im Endbereich beispielsweise einen Anschlag auf, dessen Abstand zum Vorderteil eingestellt werden kann, so dass das Vorderteil in beliebige Stellungen verschwenkt werden kann. Ferner kann die Verstelleinrichtung eine Rasteinrichtung aufweisen, um das Spritzteil in definierten Rastabständen relativ zu dem Vorderteil verschieben zu können. Ferner kann die Verstelleinrichtung eine Schraubenverbindung oder dgl.aufweisen, um eine stufenlose Höhenverstellung zu erreichen. Dadurch ist es möglich, beispielsweise mit der Rastvorrichtung größere Höhenverstellungen zu erreichen und mit Hilfe der Schraubenverbindung eine Feineinstellung zu erreichen.

Vorzugsweise ist das Vorderteil insbesondere im Endbereich in vertikaler Richtung nachgiebig ausgeführt. Beispielsweise durch Verwendung einer geeigneten Polsterung und/ oder von Abstandsgewirk. Insbesondere ist das Vorderteil mit Hilfe eines Federelementes, bei dem es sich insbesondere um eine Blattfeder handelt, gefedert. Dadurch können plötzliche Stöße abgefangen und ggf. gedämpft werden. Vorzugsweise ist der Abstand des Vorderteils zu dem Federelement durch ein Abstandseinstellelement einstellbar. Bei dem Abstandseinstellelement kann es sich beispielsweise um den relativ zum Vorderteil verstellbaren Anschlag handeln. Insbesondere kann mit Hilfe eines Härteeinstellelements die Federhärte des Federelementes eingestellt werden. Beispielsweise wird mit Hilfe des Härteeinstellelementes die Vorspannung des Federelementes verändert. Ferner kann mit Hilfe eines Längeneinstellelementes die Federlänge des Federelementes eingestellt werden. Die Federcharakteristik des Federelementes kann somit individuell an den Fahrradfahrer angepasst werden.

Das Federelement weist vorzugsweise mindestens eine drahtförmig ausgestaltete Blattfeder auf. Das Federelement kann z. B. aus Federstahl oder Edelstahl bestehen. Das Federelement ist insbesondere sowohl mit dem Vorderteil als auch mit dem Sitzteil verbunden, so dass die Stabilität des Fahrradsattels verbessert ist.

Das Vorderteil und das Sitzteil können insbesondere über mindestens einen Stützsteg miteinander verbunden sein. Der Stützsteg weist insbesondere ein Befestigungsmittel zur Befestigung mit einem Sattelrohr auf, so dass eine unabhängige Verbindung des Vorderteils und des Sitzteils mit dem Sattelrohr vermieden ist und der Montageaufwand reduziert ist. Der Stützsteg ist vorzugsweise mit der Schwenkachse und/ oder mit der Verstelleinrichtung verbunden, so dass die Höhenver-stellung des Endbereichs des Vorderteils besonderes einfach realisiert werden kann. Beispielsweise ist der Stützsteg im vordere Bereich des Vorderteils in eine Tasche eingesteckt, so dass das Vorderteil um das in die Tasche eingesteckte Ende des Stützstegs, das dadurch insbesondere die Schwenkachse bildet, besonders einfach geschwenkt werden kann.

Das Federelement und/ oder der Stützsteg weisen insbesondere unidirektionale geharzte Karbonfasern auf, so dass der erfindungsgemäße Fahrradsattel gleichzeitig leicht und stabil ausgeführt sein kann.

Nachfolgend wird die Erfindung unter Bezugnahme auf die anliegenden Zeichnungen näher erläutert.

Es zeigen:
- Fig.1: eine schematische perspektivische Ansicht eines erfindungsgemäßen Fahrradsattel,
- Fig.2: eine schematische Ansicht des Fahrradsattels von unten,
- Fig. 3: eine schematische Schnittansicht des Fahrradsattels entlang der Linie III-III aus Fig. 2,
- Fig. 4: eine schematische Schnittansicht des Fahrradsattels in einer alternativen Ausführungsform entlang der Linie III-III aus Fig. 2,
- Fig. 5: eine schematische Schnittansicht des Fahrradsattels entlang der Linie V-V aus Fig. 2 und
- Fig. 6: eine schematische Schnittansicht des Fahrradsattels in einer alternativen Ausführungsform entlang der Linie V-V aus Fig. 2.

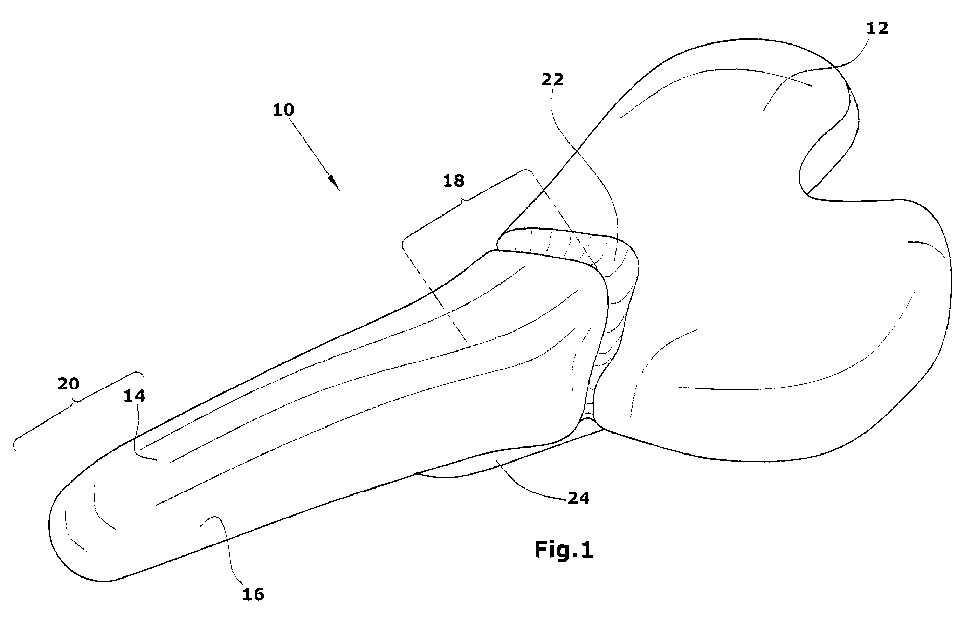

Der erfindungsgemäße Fahrradsattel 10 weist ein Sitzteil 12 und ein Vorderteils 14 mit Seitenflächen 16 auf (Fig. 1). Das Sitzteil 12 ist insbesondere derart geformt, dass beim Fahrradfahren das Gesäß des Fahrradfahrers im Wesentlichen vollständig von dem Sitzteil 12 aufgenommen wird. Das Vorderteil weist einen dem Sitzteil zugewandten Endbereich 18 auf, der erfindungsgemäß höhenverstellbar ist, um Druck auf den Genitalbereich des Fahrradfahrers zu reduzieren. Das Vorderteil 14 weist ferner einen vorderen Bereich 20 auf, der von dem Sitzteil 12 weggewandt ist und die Sattelspitze bildet. Das Sitzteil 12 und das Vorderteil 14 sind beabstandet zueinander angeordnet, so dass sich zwischen dem Sitzteil 12 und dem Vorderteil 14 eine Spalte 22 ergibt, die ggf. mit einem elastischen, flexiblen bzw. nachgiebigen Material gefüllt sein kann.

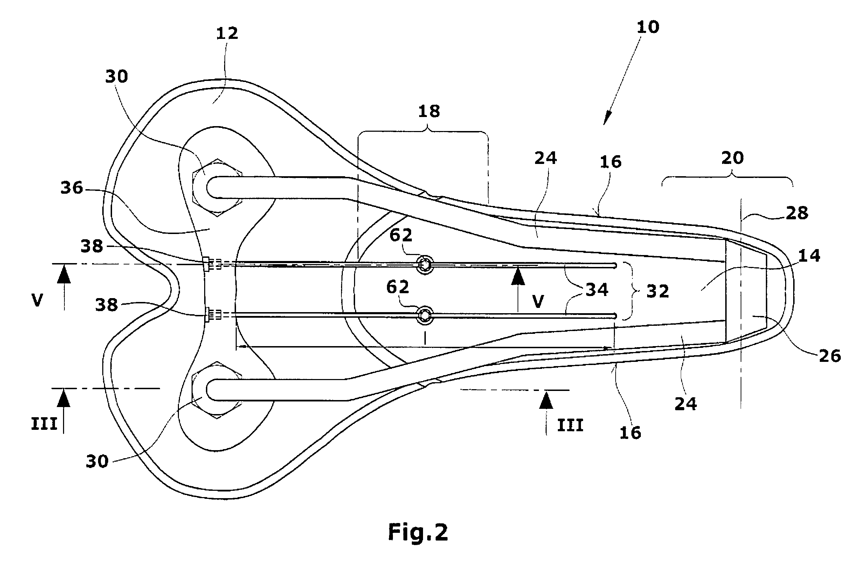

Das Sitzteil 12 und das Vorderteil 14 sind über Stützstege 24 miteinander verbunden (Fig. 2). Die Stützstege 24 sind in einer Tasche 26 des Vorderteils 14 angeordnet. Die Tasche 26 ist insbesondere im vorderen Bereich 20 des Vorderteils 14 angeordnet. Die Stützstege 24 besitzen in der Tasche 26 vorzugsweise ein deutliches Spiel, so dass eine Relativbewegung des Vorderteils 14 gegenüber den Stützstegen 24 möglich ist. Insbesondere ist es möglich, dass das Vorderteils 14 um eine Schwenkachse 28 geschwenkt werden kann, die durch die Tasche 26 verläuft, ohne dass hierfür eine Schwenkwelle oder ein Scharnier erforderlich ist. Dadurch ist der Endbereich 18 des Vorderteils 14 relativ zum Sitzteil 12 höhenverstellbar. Die Stützstege 24 sind ferner mit jeweils einer Verstelleinrichtung 30 verbunden. Durch die Verstelleinrichtungen 30 kann das Sitzteil 12 in vertikaler Richtung relativ zum Vorderteil 14 verstellt werden. Ferner kann das Sitzteil 12 aus der Horizontalen heraus bewegt werden, um beispielsweise die Belastungen der Gesäßhälften unterschiedlich einzustellen. Es ist aber auch möglich, beide Stützstege 24 mit einem gemeinsamen Quersteg oder eine gemeinsame Querplatte zu verbinden und nur genau eine Verstelleinrichtung 30 zu verwenden.

Der Fahrradsattel 10 weist ferner ein Federelement 32 auf, das im dargestellten Ausführungsbeispiel zwei drahtförmige Blattfedern 34 aufweist. Die Blattfedern 34 sind an ihrem einen Ende mit dem Vorderteil 14 verbunden und mit ihrem anderen Ende mit einem Verbindungskörper 36, der ein Teil des Sitzteils 12 ist. Die Blattfedern 34 weisen eine Schraubenverbindung 38 auf, die vollständig in dem Verbindungskörper 36 versenkt ist. Im dargestellten Ausführungsbeispiel ist die Schraubenverbindung 38 vergleichbar zu einer Schraubenverbindung einer Fahrradspeiche ausgestaltet, um bei geringem Raumbedarf die Blattfedern 34 zu befestigen.

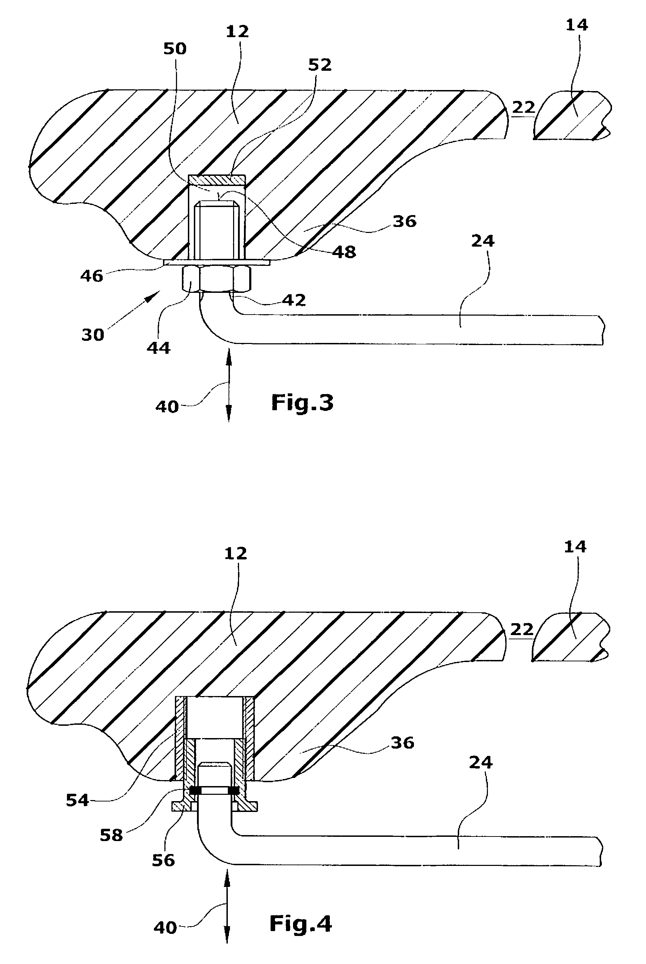

In dem Verbindungskörper 36 ist ferner die Verstelleinrichtung 30 vorgesehen (Fig. 3). Zur Höhenverstellung des Sitzteils 12 in Richtung des Pfeils 40, d. h. in vertikaler Richtung, weist der Stützsteg 24 im dargestellten Ausführungsbeispiel ein Gewinde 42 auf, auf das eine Mutter 44 geschraubt ist. Je nach Position der Mutter 44 wird über eine Distanzscheibe 46, die ggf. fest mit dem Sitzteil 12 verbunden ist, die Höhe des Sitzteils 12 eingestellt. Hierzu ragt ein Ende 48 des Stützsteges 24 in eine Öffnung 50 des Sitzteils 12 bzw. des Verbindungskörpers 36 hinein. Am oberen Ende der Öffnung 50 kann ein Anschlag 52 vorgesehen sein, der insbesondere in das Sitzteils 12 eingegossen ist.

Alternativ kann die Verstelleinrichtung 30 auch derart ausgeführt sein, dass in dem Sitzteil 12 eine Hülse 54 angeordnet ist, in die eine Verstellhülse 56 eingeschraubt werden kann (Fig. 4). Der Stützsteg 24 ist hierzu beispielsweise mit Hilfe eines Sprengrings 58 in der Verstellhülse 56 verliersicher gehalten. Dadurch wird ein fester Verbund der Stützstege 24 mit dem Sitzteil 12 erreicht, der in vertikaler Richtung einstellbar ist.

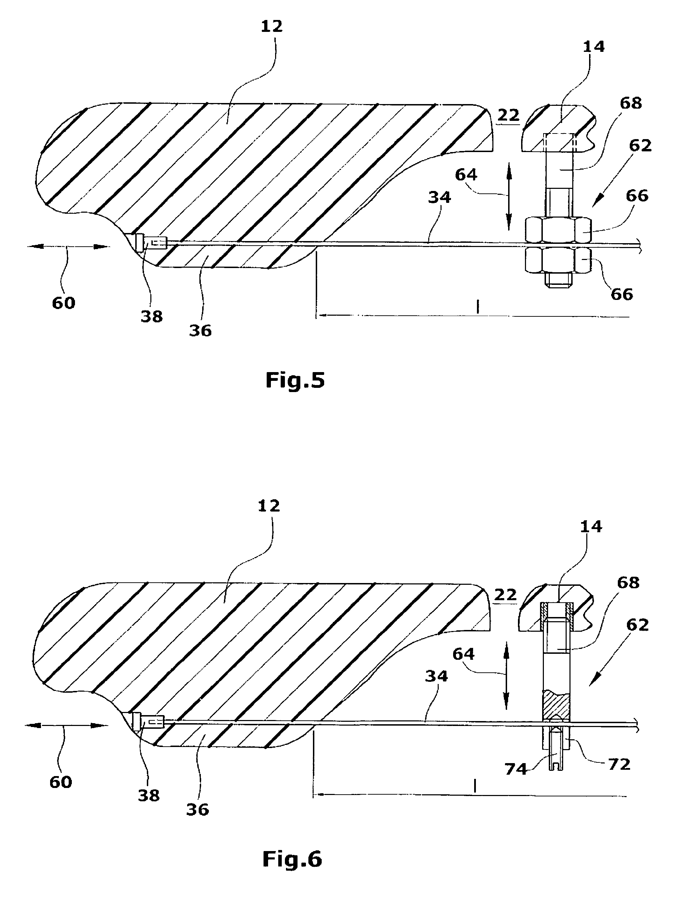

Mit Hilfe der Schraubenverbindung 38 der Blattfeder- 34 kann ferner die Federlänge I des Federelementes 32 bzw. der Blattfeder 34 eingestellt werden, indem die Blattfeder 34 in Richtung eines Pfeils 60, d. h. in horizontaler Richtung, bewegt wird (Fig. 5). Die Schraubenverbindung 38 wirkt somit auch als ein Längeneinstellelement. Dadurch ist es beispielsweise möglich, das Vorderteil 14 durch ein anderes Vorderteil 14 zu ersetzen und ggf. auftretende Abstandsänderungen in Längsrichtung des Fahrradsattels 10 auszugleichen. Ferner ist es mit Hilfe der Schraubenverbindung 38 möglich, die Vorspannung der Blattfedern 34 einzustellen, so dass die Schraubenverbindung 38 auch als ein Härteeinstellelement wirken kann.

Der Abstand des Vorderteils 14 zu dem Federelement 32 kann mit Hilfe eines Abstandseinstellelement 62 eingestellt werden, mit dem eine Bewegung des Vorderteils 14 in Richtung eines Pfeils 64 in vertikaler Richtung möglich ist. Hierzu ist beispielsweise die Blattfeder 34 mit Hilfe von Muttern 66 geführt und ggf. verklemmt. Die Muttern 66 können auf einen Bolzen 68 geschraubt werden, der ggf. in das Vorderteil 14 eingegossen ist. Ferner kann der Bolzen 68 und die Muttern 66 beispielsweise durch eine einzelne Schraube ersetzt werden, die vorzugsweise einen Schlitz aufweist, in den nicht nur ein Schraubendreher, sondern auch die Blattfeder 34 passt. Dadurch ist es möglich, die Blattfeder 34 in dem Schlitz einer Schlitzschraube zu führen. Der Schraubenkopf dient in diesem Fall gleichzeitig als Führung und als Anschlag.

Alternativ kann der Bolzen 68 mit Hilfe einer Hülse 70 in das Vorderteil 14 eingeschraubt werden (Fig. 6). Hierzu weist der Bolzen 68 vorzugsweise einen Schlitz 72 auf, in den die Blattfeder 34 eingesetzt werden kann. Gleichzeitig dient der Schlitz 72 als Aufnahme für einen Schraubendreher, um den Bolzen 68 in das Vorderteil 14 einzuschrauben. Vorzugsweise weist der Bolzen 68 im Bereich des Schlitzes 72 eine Gewindebohrung auf, in die zur Fixierung der Blattfeder 34 beispielsweise eine Madenschraube 74 eingeschraubt werden kann. Für den Fall, dass die Blattfeder 34 nicht fixiert, sondern nur geführt werden soll, ist der Schlitz 72 ausreichend, so dass die Gewindebohrung und die Madenschraube 74 nicht erforderlich sind.

Es ist somit möglich, die Verbindung des Vorderteile 14 mit dem Federelement 32 unterschiedlich zu realisieren. Einerseits ist es möglich, dass das Vorderteil 14 ggf. über einen Anschlag auf dem Federelement 32 aufliegt. In weiterer Ausgestaltung kann der Anschlag verstellbar ausgeführt sein, um das Abstandeinstellelement 62 zu realisieren. Der Anschlag bzw. das Abstandeinstellelement 62 oder das Vorderteil 14 kann eine Führung Für das Federelement 32 aufweisen, in der das Federelement 32 locker geführt ist. Ferner ist es möglich, das Abstandseinstellelement 62 oder einen nicht verstellbaren Anschlag mit dem Federelement 32 zu fixieren, so dass ein sicherer Verbund erreicht wird, der auf Grund der Federwirkung des Federelements 32 zu einem nachgiebigen Endbereich 18 führt, um einen Druck auf den Genitalbereich des Fahrradfahrers zu reduzieren.

## Patentansprüche

1. Fahrradsattel, insbesondere Herren-Fahrradsattel, mit
einem Sitzteil (12) für das Gesäß eines Fahrradfahrers und
einem sich an das Sitzteil (12) anschließende Vorderteil (14), das einen dem Sitzteil (12) zugewandten Endbereich (18) aufweist,
wobei zumindest der Endbereich (18) des Vorderteils (14) relativ gegenüber dem Sitzteil (12) höhenverstellbar ist, und
wobei das Vorderteil (14) zur Höhenverstellung seines Endbereichs (18) eine zum Sitzteil (12) beabstandete Schwenkachse (28) aufweist,
**dadurch gekennzeichnet,**
**dass** der vordere Bereich (20) des Vorderteils (14) relativ zu dem Sitzteil (12) feststeht und der Endbereich (18) des Vorderteils (14) nach unten bzw. nach oben verschwenkbar ist.

2. Fahrradsattel nach Anspruch 1, **dadurch gekennzeichnet, dass** das Vorderteil (14) mit dem Sitzteil (12) über eine Verstelleinrichtung (30) verbunden ist,
wobei durch die Verstelleinrichtung (30) das Sitzteil (12) relativ gegenüber dem Vorderteil (14) bei im Wesentlichen gleicher horizontaler Ausrichtung höhenverstellbar ist.

3. Fahrradsattel nach Anspruch 2, **dadurch gekennzeichnet, dass** die Verstelleinrichtung (30) eine Rastvorrichtung aufweist.

4. Fahrradsattel nach Anspruch 2 oder 3, **dadurch gekennzeichnet, dass** die Verstelleinrichtung ein Verstellelement (30) zur stufenlosen Höhenverstellung, insbesondere eine Schraubenverbindung (42, 44; 54, 56) aufweist.

5. Fahrradsattel nach einem der Ansprüche 1 - 4, **dadurch gekennzeichnet, dass** das Vorderteil (14) und das Sitzteil (12) zur Querteilung des Fahrradsattels (10) zueinander beabstandet angeordnet sind.

6. Fahrradsattel nach einem der Ansprüche 1 - 5, **dadurch gekennzeichnet, dass** das Vorderteil (14) insbesondere im Endbereich (18) in vertikaler Richtung nachgiebig ausgeführt ist.

7. Fahrradsattel nach einem der Ansprüche 1 - 6, **dadurch gekennzeichnet, dass** das Vorderteil (14) mit Hilfe eines Federelementes (32), insbesondere einer Blattfeder (34), gefedert ist.

8. Fahrradsattel nach Anspruch 7, **dadurch gekennzeichnet, dass** der Abstand des Vorderteils (14) zu dem Federelement (32) durch ein Abstandseinstellelement (62) einstellbar ist.

9. Fahrradsattel nach Anspruch 7 oder 8, **dadurch gekennzeichnet, dass** die Federhärte des Federelementes (32) durch ein Härteeinstellelement (38) einstellbar ist.

10. Fahrradsattel nach einem der Ansprüche 7 - 9, **dadurch gekennzeichnet, dass** das Federelement (32) mindestens eine drahtförmig ausgestaltete Blattfeder (34) aufweist.

11. Fahrradsattel nach einem der Ansprüche 7 - 10, **dadurch gekennzeichnet, dass** die Federlänge (I) des Federelementes (32) durch ein Längeneinstellelement (38) längenverstellbar ist, wobei das Längeneinstellelement (38) insbesondere als vorzugsweise versenkbare Schraubenverbindung (38) ausgestaltet ist.

12. Fahrradsattel nach einem der Ansprüche 7 - 11, **dadurch gekennzeichnet, dass** das Federelement (32) unidirektionale, geharzte Karbonfasern aufweist.

13. Fahrradsattel nach einem der Ansprüche 1 - 12, **dadurch gekennzeichnet, dass** das Vorderteil (14) und das Sitzteil (12) über mindestens einen Stützsteg (24) verbunden sind, der insbesondere unidirektionale, geharzte Karbonfasern aufweist.

14. Fahrradsattel nach Anspruch 13, **dadurch gekennzeichnet, dass** der Stützsteg (24) mit der Schwenkachse (28) und/ oder mit der Verstelleinrichtung (30) verbunden ist.

15. Fahrradsattel nach Anspruch 13 oder 14, **dadurch gekennzeichnet, dass** der Stützsteg (24) zur Befestigung mit einem Sattelrohr mit einem Befestigungsmittel verbunden ist.

## Claims

1. A bicycle saddle, in particular a man's bicycle saddle, comprising
a seat part (12) for the bottom of a cyclist, and
a front part (14) contiguous with the seat part (12), said front part having an end portion (18) facing the seat part (12),
at least the end portion (18) of the front part (14) being vertically adjustable with respect to the seat part (12), and
the front part (14) having a pivot axis (28) spaced from the seat part (12), for the vertical adjustment of its end portion (18),
**characterized in that**
the front portion (20) of the front part (14) is fixed with respect to the seat part (12) and the end portion (18) of the front part (14) is pivotable upward and downward, respectively.

2. The bicycle saddle of claim 1, **characterized in that** the front part (14) is connected to the seat part (12) through an adjustment means (30), said adjustment means (30) allowing for the vertical adjustment of the seat part (12) with respect to the front part (14), while the horizontal orientation substantially being the same.

3. The bicycle saddle of claim 2, **characterized in that** the adjustment means (30) comprises a locking device.

4. The bicycle saddle of claim 2 or 3, **characterized in that** the adjustment means comprises an adjustment element (30) for a smooth vertical adjustment, especially a screw connection (42, 44; 54, 56).

5. The bicycle saddle of one of claims 1-4, **characterized in that** the front part (14) and the seat part (12) are spaced from each other so as to divide the bicycle saddle (10) in the transversal direction.

6. The bicycle saddle of one of claims 1-5, **characterized in that** the front part (14) is resilient in the vertical direction, in particular in the end portion (18) thereof.

7. The bicycle saddle of one of claims 1-6, **characterized in that** the front part (14) is cushioned by means of a spring element (32), especially a leaf spring (34).

8. The bicycle saddle of claim 7, **characterized in that** the distance of the front part (14) to the spring element (32) is adjustable by means of a distance adjustment element (62).

9. The bicycle saddle of claim 7 or 8, **characterized in that** the spring hardness of the spring element (32) is adjustable by means of a hardness adjustment element (38).

10. The bicycle saddle of one of claims 7-9, **characterized in that** the spring element (32) comprises at least one leaf spring (34) of wire-shaped design.

11. The bicycle saddle of one of claims 7-10, **characterized in that** the spring length (I) of the spring element (32) is adjustable in length by means of a length adjustment element (38), said length adjustment element (38) being configured in particular as a preferably concealable screw connection (38).

12. The bicycle saddle of one of claims 7-11, **characterized in that** the spring element (32) comprises unidirectional resinated carbon fibers.

13. The bicycle saddle of one of claims 1 - 12, **characterized in that** the front part (14) and the seat part (12) are connected through at least one supporting web (24) comprising, in particular, unidirectional resinated carbon fibers.

14. The bicycle saddle of claim 13, **characterized in that** the supporting web (24) is connected with the pivot axis (28) and/or the adjustment means (30).

15. The bicycle saddle of claim 13 or 14, **characterized in that** the supporting web (24) is connected to a fastening means for fastening to a saddle post.

## Revendications

1. Selle de bicyclette, à savoir une selle de bicyclette d'homme, comprenant
une partie de siège (12) pour les fesses d'un cycliste,
une partie avant (14) adjacent à la partie de siège (12), la partie avant ayant une région d'extrémité (18) face à la partie de siège (12),
au moins la région d'extrémité (18) de la partie avant (14) étant verticalement ajustable relatif à la partie de siège (12), et
la partie avant (14) comprenant un axe de pivotement (28) écarté de la partie de siège (12), l'axe étant prévu pour l'ajustage vertical de la région d'extrémité (18),
**caractérisée en ce que**
la région avant (20) de la partie avant (14) est stationnaire relatif à la partie de siège (12) et la région d'extrémité (18) de la partie avant (14) est pivotable vers le bas et le haut, respectivement.

2. Selle de bicyclette selon la revendication 1, **caractérisée en ce que** la partie avant (14) est reliée à la partie de siège (12) par un moyen d'ajustage (30), la partie de siège (13), grâce à le moyen d'ajustage (30), étant ajustable verticalement par rapport à la partie avant (14), l'orientation horizontal restant sensiblement la même.

3. Selle de bicyclette selon la revendication 2, **caractérisée en ce que** le moyen d'ajustage (30) comprend un dispositif d'encliquetage.

4. Selle de bicyclette selon la revendication 2 ou 3, **caractérisée en ce que** le moyen d'ajustage comprend un élément d'ajustage (30) pour l'ajustage vertical continu, en particulier un raccord à vis (42, 44; 54, 56).

5. Selle de bicyclette selon une des revendications 1-4, **caractérisée en ce que** la partie avant (14) et la partie de siège (12) son écartées l'une de l'autre afin de diviser transversalement la selle de bicyclette (10).

6. Selle de bicyclette selon une des revendications 1-5, **caractérisée en ce que** la partie avant (14) est souple dans le sens vertical, notamment dans la région d'extrémité (18).

7. Selle de bicyclette selon une des revendications 1-6, **caractérisée en ce que** la partie avant (14) est suspendue par un élément de ressort (32), notamment un ressort à lames (34).

8. Selle de bicyclette selon la revendication 7, **caractérisée en ce que** la distance entre la partie avant (14) et l'élément de ressort (32) peut être ajustée par un élément d'ajustage de distance (62).

9. Selle de bicyclette selon la revendication 7 ou 8, **caractérisée en ce que** la raideur de l'élément de ressort (32) est ajustable par un moyen d'ajustage de raideur (38).

10. Selle de bicyclette selon une des revendications 7-9, **caractérisée en ce que** l'élément de ressort (32) comprend au moins un ressort à lames (34) en forme de fil.

11. Selle de bicyclette selon une des revendications 7-10, **caractérisée en ce que** la longueur du ressort (I) de l'élément de ressort (32) est ajustable en longueur par un élément d'ajustage de longueur (38), ledit élément d'ajustage de longueur (38) notamment étant en forme d'un raccord à vis (38) escamotable.

12. Selle de bicyclette selon une des revendications 7-11, **caractérisée en ce que** l'élément de ressort (32) comprend des fibres de carbone unidirectionnels résinés.

13. Selle de bicyclette selon une des revendications 1-12, **caractérisée en ce que** la partie avant (14) et la partie de siège (12) sont reliées par au moins un âme de support (24) comprenant, en particulier, des fibres de carbone unidirectionnels résinés.

14. Selle de bicyclette selon la revendication 13**, caractérisée en ce que** l'âme de support (24) est relié à l'axe de pivotement (28) et/ou le moyen d'ajustage (30).

15. Selle de bicyclette selon la revendication 13 ou 14, **caractérisée en ce que** l'âme de support (24) est relié à un moyen de fixation pour l'attachement à un tube de selle.
